# EUROPEAN PATENT APPLICATION

(11) **EP 4 398 459 A1**
(43) Date of publication of application: **10.07.2024**
(21) Application number: 23213215.9
(22) Date of filing: 30.11.2023
(51) Int. Cl.: H02K 3/52, H02K 5/22, H02K 5/10, H02K 11/33

(54) **AN ELECTRICAL MOTOR STATOR AND COMPRESSOR**

(30) Priority: 22.12.2022 CN 202211654656
(71) Applicant: Robert Bosch GmbH, 70442 Stuttgart (DE)
(72) Inventor: Kohler, Stephan, 77815 Buehl (DE); WAN, Zhengmao, Changsha, Hunan, 410100 (CN); Ritt, Jean-Marc, 77815 Buehl (DE); CHENG, Fan, Changsha, Hunan, 410100 (CN); WANG, Yilin, Changsha, Hunan, 410100 (CN); He, Guofu, Changsha, Hunan, 410100 (CN)

(57) **Abstract**

The present application provides an electrical motor stator and a compressor. The electrical motor stator comprises a stator assembly and contact plate, wherein the stator assembly comprises an iron core; a winding comprising a plurality of wires; a first insulating seat; and a plurality of first electrical contacts fixed to the first insulating seat, wherein the wires extend to and are electrically connected to the first electrical contacts. The contact plate is positioned relative to a stator assembly and comprises a body; a plurality of sleeve seats comprising a first opening, a second opening, and a cavity extending between the first opening and the second opening, wherein the first opening is positioned at a first side of the body and the second opening is positioned at a second side of the body, with the sleeve seats being positioned to correspond to the first electrical contacts and, through the first opening, at least partially accommodating the first electrical contacts within the cavity; a plurality of second electrical contacts comprising a first connecting portion and a second connecting portion, with the first connecting portion disposed within the cavity and in contact with the first electrical contacts, establishing an electrical connection, and the second connecting portion exposed on the second side of the body.

## Description

### Technical Field

The present application relates to the field of electrical motor structures. More specifically, the present application relates to an electrical motor stator which is intended to provide insulating properties and manufacturability. The present application also relates to a compressor comprising an electrical motor stator as described above.

### Background Art

With the development and popularization of electric vehicles, and the gradual maturation of fast-charging technology, the operating voltage of motors or electrical drives in vehicles has been increasing, for example, from 48 V to 800 V. High voltages also impose higher requirements on the safety and insulating properties of electrical drives. For a compressor used in a vehicle, its electrical drive is exposed to coolants and oils. These coolants and oils will have a certain level of conductivity at high voltages, imposing higher requirements on the insulation properties of the electrical drive. In addition, it is desired that electrical motor stators can be manufactured with a higher level of automation.

### Summary of the Invention

It is an aim of one aspect of the present application to provide an electrical motor stator, which is intended to improve the insulating properties of the electrical motor, and to provide automated manufacturing capabilities. It is an aim of another aspect of the present application to provide a compressor comprising the electrical motor stator described above.

The aims of the present application are achieved through the following technical solutions:
An electrical motor stator comprising:
a stator assembly comprising
an iron core;
a winding which is wound within the iron core and comprises a plurality of wires extending from the iron core;
a first insulating seat mounted to one end surface of the iron core;
a plurality of electrically conductive first electrical contacts fixed to the first insulating seat, wherein the various wires each extend to the respective first electrical contacts and are electrically connected to the first electrical contacts;
a contact plate positioned relative to the stator assembly and comprising:
   an insulated body;
   a plurality of sleeve seats disposed on the body and comprising a first opening, a second opening, and a cavity extending between the first opening and the second opening, wherein the first opening is positioned at a first side of the body and the second opening is positioned at a second side of the body, with the respective sleeve seats being positioned to correspond to the respective first electrical contacts and, through the first opening, at least partially accommodating the first electrical contacts within the cavity;
   a plurality of electrically conductive second electrical contacts, comprising a first connecting portion and a second connecting portion, wherein the first connecting portion is disposed within the cavity and in contact with the first electrical contact to establish an electrical connection, and the second connecting portion is exposed on the second side of the body.

In the electrical motor stator described above, optionally, the body and the sleeve seats are integrally injection-molded from an insulating material, the second electrical contacts are at least partially insert-molded within the body, and the first insulating seat is spaced between the winding and the iron core.

In the electrical motor stator described above, optionally, the cavity is filled with a gel or epoxy resin, and at least a portion of the first electrical contacts and second electrical contacts is enveloped by gel or epoxy resin, wherein the gel or epoxy resin is electrically insulating, and wherein the second opening is configured such that the first electrical contacts and second electrical contacts can be welded through the second opening prior to filling the gel or epoxy resin.

In the electrical motor stator described above, optionally, the opposing end surfaces of the iron core are distributed along the axial direction, the first electrical contacts extend from the first insulating seat along the axial direction, and the cavity of the sleeve seats extend along the axial direction;
wherein the electrical motor stator comprises four wires, each corresponding to the U terminal, V terminal, W terminal, and center point of the three-phase alternating current; wherein the wires corresponding to the U terminal, V terminal, and W terminal of the three-phase alternating current are located adjacent to each other.

In the electrical motor stator described above, optionally, the first electrical contacts comprise an insertion portion and a bent portion, wherein the insertion portion is inserted into and fixed in place within the first insulating seat, and the bent portion extends around the wires and secures the wires.

In the electrical motor stator described above, optionally, it further comprises a second insulating seat mounted on another end surface of the iron core; wherein the first insulating seat is spaced between the winding and the iron core.

In the electrical motor stator described above, optionally, the connection between the first electrical contacts and the wires, as well as between the first electrical contacts and the second electrical contacts, is established by one of the following methods: brazing, resistance welding, laser welding.

In the electrical motor stator described above, optionally, the contact plate is fixed to the first insulating seat by one of the following methods: positioning pins, bolts, screws, hot-riveted structures, or a combination thereof; the contact plate further comprises a plurality of pins or pin holes extending in the axial direction for positioning the electrical motor stator during assembly.

A compressor comprising:
a chamber having an opening;
an electronic control unit mounted in a space hermetically separated from the chamber;
electrical terminals electrically connected to the electrical control unit and extending into the chamber;
the electrical motor stator described above, which is mounted within the chamber through the opening, wherein the second connecting portion of the second electrical contacts is electrically connected to the electrical terminals via a connector.

In the compressor described above, optionally, the connector comprises:
a first insertion part which is inserted into the second connecting portion of the second electrical contacts, wherein the electrical motor stator is fitted within the chamber from top to bottom through the opening, and the contact plate is positioned at the bottom of the electrical motor stator; as well as a second insertion part that is electrically connected to the first insertion part, with the electrical terminals connected to the second connection portion, thereby establishing an electrical connection between the winding and the electrical control unit;
wherein the electrical terminals pass through the bottom wall of the chamber and are connected to the electrical control unit, with the bottom wall positioned on one side of the chamber and opposite to the opening.

### Description of Accompanying Drawings

The present application will be described in further detail below in conjunction with the accompanying drawings and preferred embodiments. It will be appreciated by those skilled in the art that these accompanying drawings are drawn for purposes of interpreting preferred examples only, and therefore should not be construed as limiting the scope of the present application. In addition, unless otherwise specified, the accompanying drawings are intended purely to conceptually represent the composition or construction of the described objects and may include exaggerated representations. The accompanying drawings are also not necessarily to scale.
FIG. 1 is an isometric view of an electrical motor stator according to one example of the present application.
FIG. 2 is an isometric view of the first step in the assembly of the example shown in FIG. 1.
FIG. 3 is an isometric view of the second step in the assembly of the example shown in FIG. 1.
FIG. 4 is an isometric view of the third step in the assembly of the example shown in FIG. 1.
FIG. 5 is an isometric view of the fourth step in the assembly of the example shown in FIG. 1.
FIG. 6 is the top view of the example shown in FIG. 5.
FIG. 7 is the front view of the contact plate of the example shown in FIG. 1.
FIG. 8 is the left view of the example shown in FIG. 7.
FIG. 9 is an isometric view of the contact plate of the example shown in FIG. 1.
FIG. 10 is an exploded view of the example shown in FIG. 9.
FIG. 11 is the front view of a first electrical contact of the example shown in FIG. 1.
FIG. 12 is the left view of the first electrical contact shown in FIG. 11.
FIG. 13 is a schematic diagram illustrating the connection of some components of a compressor according to one example of the present application.
FIG. 14 is a cross-sectional view of the example shown in FIG. 13, and schematically shows an electrical control unit.
FIG. 15 is a partial cross-sectional view of the compressor according to one example of the present application.

### Specific Embodiments

Preferred examples of the present application will be described in detail below with reference to the accompanying drawings. It will be appreciated by those skilled in the art that these descriptions are purely descriptive, exemplary, and should not be construed as limiting the scope of protection of the present application.

First, it should be noted that the terms top, bottom, upward, downward, and other orientation terms referred to herein are defined relative to the orientations in each of the accompanying drawings. These orientations are relative concepts and therefore will vary based on their respective positions and states. Therefore, these or other orientation terms should not be construed as limiting.

In addition, it should be noted that for any single technical feature described or implied in the examples herein or shown or implied in the accompanying drawings, these technical features (or equivalent thereof) can be combined to obtain other examples not explicitly mentioned herein.

It should be noted that in different drawings, the same reference numbers represent the same or substantially similar components.

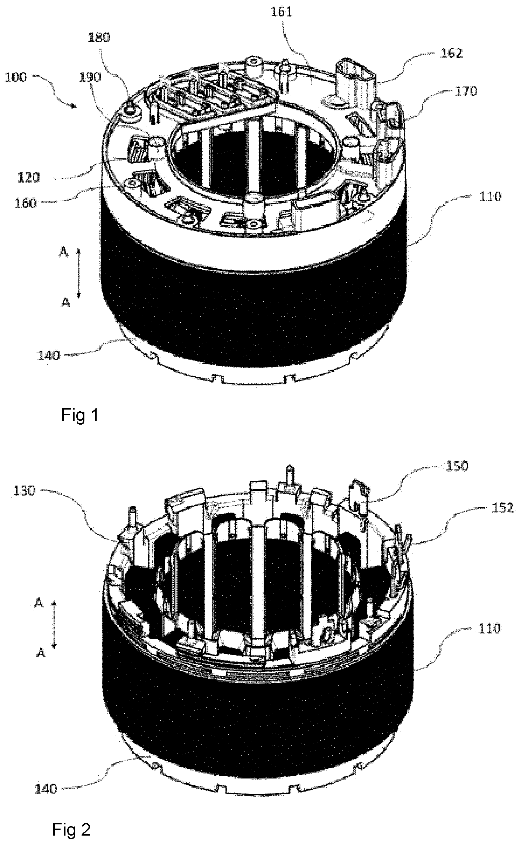

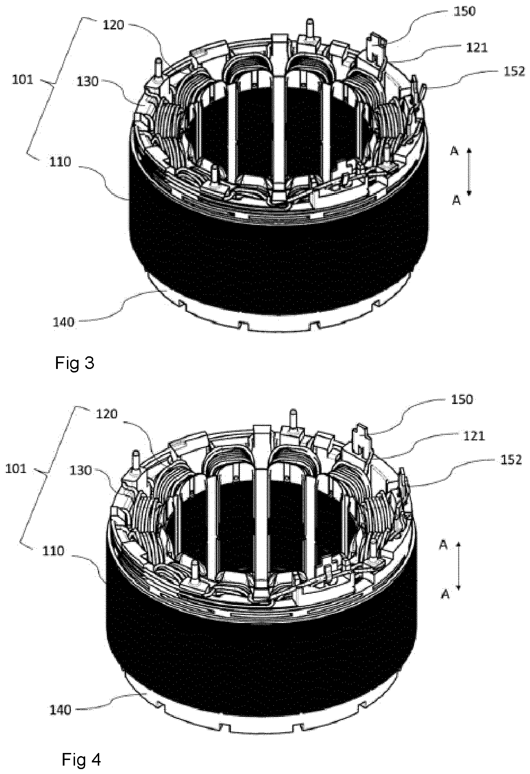

FIG. 1 is an isometric view of an electrical motor stator according to one example of the present application. The electrical motor stator 100 may comprise an iron core 110, a winding 120, a first insulating seat 130, a second insulating seat 140 and a contact plate 160, among others. The electrical motor stator 100 has an overall cylindrical profile and its interior is hollow. In addition, in one example, the electrical motor stator 100 may comprise a stator assembly 101 and the contact plate 160, among others. As shown in FIG. 3 and FIG. 4, the stator assembly 101 may comprise the iron core 110, the winding 120, and the first insulating seat 130, among others.

The plurality of components of the electrical motor stator 100 may be configured to extend along the axial direction A-A. For example, the iron core 110 may extend along the axial direction A-A and comprises opposing end surfaces disposed along the axial direction A-A. It will be readily appreciated that the iron core 110 may comprise a plurality of poles extending along the axial direction A-A and a plurality of slots located between adjacent poles.

The winding 120 is wound within the iron core 110 and comprises a plurality of wires extending from the iron core 110; The windings 120 may comprise one or a plurality of wires. The wires may have an insulating surface and may be made of copper or a copper alloy. The wires are wound around the poles of the iron core 110 and stacked in a predetermined pattern in slots between the poles to form the winding 120.

The first insulating seat and second insulating seat 140 are each mounted to opposing end surfaces of the iron core 110. In FIG. 1, the first insulating seat is located at the upper end surface of the iron core 110, and is obscured by the contact plate 160 and is not visible. The second insulating seat 140 is shown as being at the lower end surface of the iron core 110. In one example, the first insulating seat and second insulating seat 140 are disposed between the winding 120 and the iron core 110, thereby spacing the winding 120 and the iron core 110.

The contact plate 160 may be attached to the first insulating seat, for example, the contact plate 160 may be attached by one of the following methods: positioning pins, bolts, screws, hot-riveted structures, or a combination thereof. In the illustrated example, the contact plate 160 is attached to the first insulating seat, which is unillustrated, by four hot-riveted structures 180. It will be readily appreciated that the contact plate 160 may also be positioned relative to the first insulating seat by a number of positioning pins. In addition, the contact plate 160 may also comprise one or a plurality of pin holes 190. The function of the pin holes 190 is as follows: during the assembly of the compressor, the positioning pin holes 190 may correspond to pins on other components of the compressor, thereby positioning the electrical motor stator 100 relative to the other components of the compressor. Similarly, pins disposed on the contact plate 160 and pin holes disposed on other components of the compressor can achieve a similar effect.

The contact plate 160 may comprise a body 161, a plurality of sleeve seats 162, and a plurality of second electrical contacts 170. In the illustrated example, the body 161 is shown as having a substantially annular surface. The sleeve seats 162 may be configured to extend in the axial direction A-A and comprise a first opening, a second opening, and a cavity extending between the first opening and the second opening. The sleeve seats 162 may pass through the body 161 such that the first opening and second opening are each located on both sides of the body 161, and wherein the second opening may be positioned away from the body 161. In the state shown in FIG. 1, the second opening may be an opening in the upper or top portion of the sleeve seats 162, and the first opening is not visible. A portion of the cavity can be seen through the second opening, and a second electrical contact 170 located within the cavity can also be seen.

The body 161 may comprise a first side and a second side. In one example, the first opening may be positioned at a first side of the body 161 and the second opening may be positioned at a second side of the body 161. In other words, the first side is the upper surface of the body 161 visible in FIG. 1 and the second side is the lower surface of the body 161 not visible in FIG. 1.

The contact plate 160 may be configured as an integral unit. For example, the body 161 and the plurality of sleeve seats 162 may comprise an insulating material, such as plastic. In one example, the body 161 and the plurality of sleeve seats 162 may be integrally molded from plastic.

The second electrical contacts 170 may each be disposed in the cavity of the sleeve seats 162, and may be proximate to the second opening, and therefore are at least partially visible in FIG. 1. In one example, the second electrical contacts 170 may be formed from an electrically conductive material, for example, from copper or a copper alloy. In one example, the second electrical contacts 170 may be integrally molded with the body 161 and the plurality of sleeve seats 162. For example, the second electrical contacts 170 may be at least partially embedded in the sleeve seats 162 and/or the body 161. The second electrical contacts 170 may have a one-to-one correspondence with the sleeve seats 162. For example, the example in FIG. 1 shows four sleeve seats 162, each of which comprising a single second electrical contact 170. For the sake of clarity, only a single sleeve seat 162 and a single second electrical contact 170 are identified in the various accompanying drawings.

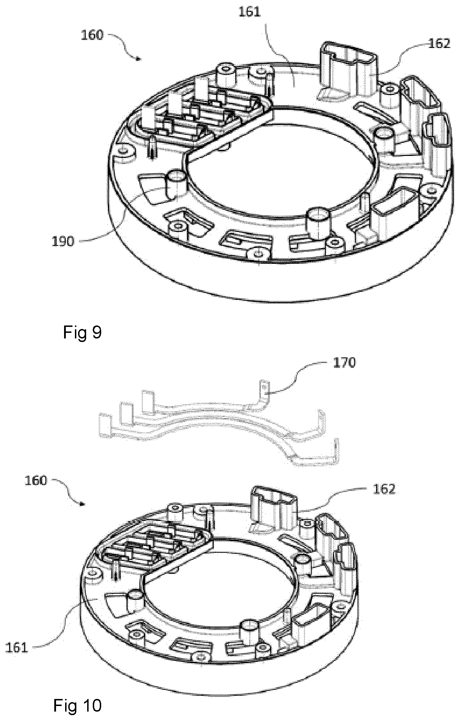

In addition, as shown in more detail in the exploded view of FIG. 10, the second electrical contacts 170 may comprise a first connecting portion and a second connecting portion. In the state shown in FIG. 10, the first connecting portion may be the right end of the second electrical contact 170 and the second connecting portion may be the left end of the second electrical contact 170. In one example, the first connecting portions of each second electrical contact 170 are each disposed in the respective cavity and in contact with each first electrical contact 150 to establish an electrical connection, and each of the second connecting portions is exposed on the second side of the body (161). In one example, each of the second connecting portions is located away from the first electrical contacts 150.

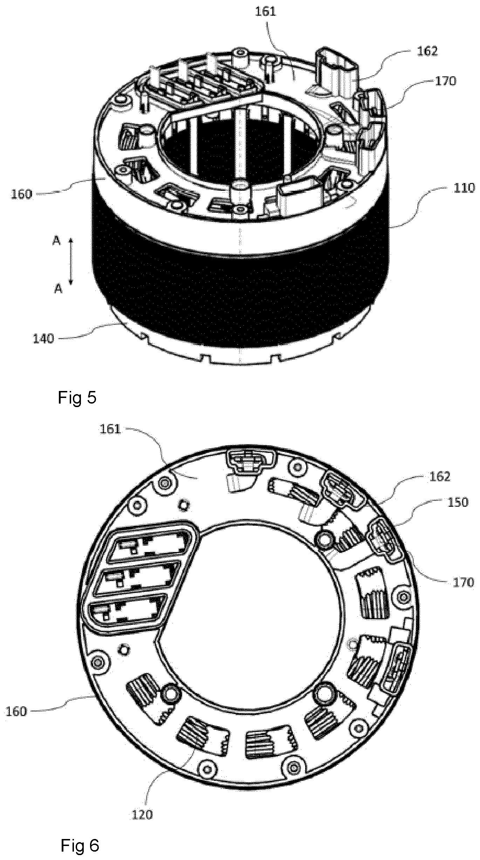

FIG. 2 to FIG. 5 show several steps in the assembly process of the example shown in FIG. 1, and FIG. 6 is a top view of the example shown in FIG. 5.

As shown in FIG. 2, the first insulating seat 130 and the second insulating seat 140 are each mounted to opposing end surfaces of the iron core 110. A plurality of first electrical contacts 150 may be attached to the first insulating seat 130. In the illustrated example, four first electrical contacts 150 are attached to the first insulating seat 130, and each of the first electrical contacts 150 substantially extends along the axial direction A-A. Each of the first electrical contacts 150 may comprise a bent portion 152. In the first step shown in FIG. 2, each of the bent portions 152 is kept away from other portions of the first electrical contact 150 and is not bent. It will be readily appreciated that the first insulating seat 130 and the second insulating seat 140 may be made of an insulating material, for example, plastic.

As shown in FIG. 3, the winding 120 is wound within the iron core 110 and a plurality of wires 121 extend from the winding 120; In the illustrated example, four wires 121 extend from the winding 120. The wires 121 have a one-to-one correspondence with the first electrical contacts 150. Each of the wires 121 may extend to each first electrical contact 150 and be electrically connected to the first electrical contact 150. Specifically, the wires 121 may be laid over the bent portions 152. In one example, the first electrical contacts 150 may be formed from an electrically conductive material, for example, from copper or a copper alloy.

The winding 120 may comprise four wires 121, each corresponding to the U terminal, V terminal, W terminal, and center point of the three-phase alternating current; wherein the wires corresponding to the U terminal, V terminal, and W terminal of the three-phase alternating current are located adjacent to each other, and the wire corresponding to the center point is disposed at a more distant location.

As shown in FIG. 4, each of the bent portions 152 is bent around the wires 121 and secures the wires 121. At this point, the bent portions 152 are positioned proximate to other portions of the first electrical contacts 150. In one example, a connection may be established between the bent portions 152 and the wires 121, in particular an electrical connection. Specifically, the bent portions 152 and the wires 121 may be connected by one of the following methods: brazing, resistance welding, laser welding. In one example, the bent portions 152 may be connected to the wires 121 by resistance spot welding. In this way, an electrical connection is established between the wires 121 and the first electrical contacts 150.

FIG. 3 and FIG. 4 also schematically show the stator assembly 101. As shown in the accompanying drawings, the stator assembly 101 may comprise the iron core 110, the winding 120, and the first insulating seat 130, among other components. In one example, the stator assembly 101 may further comprise the second insulating seat 140, among other components.

As shown in FIG. 5 and FIG. 6, the contact plate 160 is adapted to the first insulating seat 130, but is not fully attached by fasteners in FIG. 5 and FIG. 6. Each of the sleeve seats 162 of the contact plate 160 is positioned to correspond to each of the first electrical contacts 150 in a one-to-one correspondence. It will be readily appreciated that the first opening of each of the sleeve seats 162 is directed toward each of the first electrical contacts 150, and that the first electrical contacts 150 at least partially pass through the first opening and are accommodated in the cavity of the sleeve seats 162. In one example, the first electrical contacts 150 are in contact with the second electrical contacts 170, establishing an electrical connection. In addition, the first electrical contacts 150 and the second electrical contacts 170 may be connected by one of the following methods: brazing, resistance welding, laser welding. In one example, the first electrical contacts 150 may be connected to the second electrical contacts 170 by laser welding. In FIG. 5, both the first electrical contacts 150 and the second electrical contacts 170 are visible.

Thus, the electrical motor stator of the present application provides an electrical connection from the winding 120 to the second electrical contacts 170, making it possible to establish an electrical connection from an unillustrated power source to the winding 120.

Each of the components of the electrical motor stator disclosed in the present application may be assembled by means of an automated production line. For example, the contact plate 160 is integrally configured and comprises mechanisms such as positioning pins to facilitate automated assembly operations. Several components are disposed to extend in the axial direction A-A, which also facilitates the implementation of an automated assembly process. By employing an automated assembly process, the electrical motor stator 100 of the present application can achieve improved installation accuracy and increased production efficiency.

Although not shown in detail, it is readily appreciated that the interior of the cavity of the sleeve seats 162 may be filled with gel or epoxy resin. The filling operation may be performed in the step shown in FIG. 5 or after the step shown in FIG. 5. In one example, at least one portion of the first electrical contacts 150 and the second electrical contacts 170 is enveloped by gel or epoxy resin. The gel or epoxy resin may be electrically insulating in order to increase the insulating capabilities of the electrical motor stator.

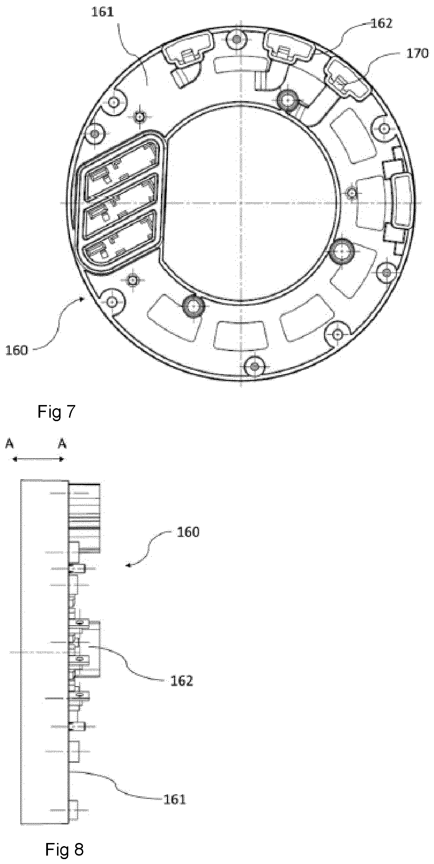

FIG. 7 is a front view of the contact plate of the example shown in FIG. 1, FIG. 8 is the left view of the contact plate of FIG. 7, FIG. 9 is an isometric view of the contact plate of the example shown in FIG. 1, and FIG. 10 is an exploded view of the example shown in FIG. 9. As shown in the accompanying drawings, the sleeve seats 162 may protrude in the axial direction A-A relative to the body 161, and FIG. 7 and FIG. 10 also illustrate the second electrical contacts 170 in the cavity of the sleeve seats 162. The number of the second electrical contacts 170 may be three, with each corresponding to the U, V, and W terminals of the three-phase alternating current. The second electrical contacts 170 may extend internally within the sleeve seats 162 and the body 161, and extend from the right side in FIG. 10 to an additional wiring port on the left side of FIG. 10. The second electrical contacts 170 may be made of an electrically conductive material and the body 161 and the sleeve seats 162 may be made of an insulating material. The second electrical contacts 170 is at least partially molded within the body 161 and/or the sleeve seats 162. In addition, pin holes 190 are identified in FIG. 9. The pin holes 190 may be used to position the electrical motor stator 100 relative to other components of the compressor. It will be readily appreciated that the contact plate 160 shown in FIG. 7 and FIG. 8 may be integrally configured and may be automatically mounted in place by machine operations.

In addition, as shown in the accompanying drawings, the first connecting portion of the second electrical contacts 170 may be positioned within the sleeve seats 162 and be electrically connected to the first electrical contacts 150, and the second connecting portion of the second electrical contacts 170 may extend into an electrical interface on the contact plate 160. As described in greater detail below, the second connecting portion of the second electrical contacts 170 are electrically connected to the connection portion.

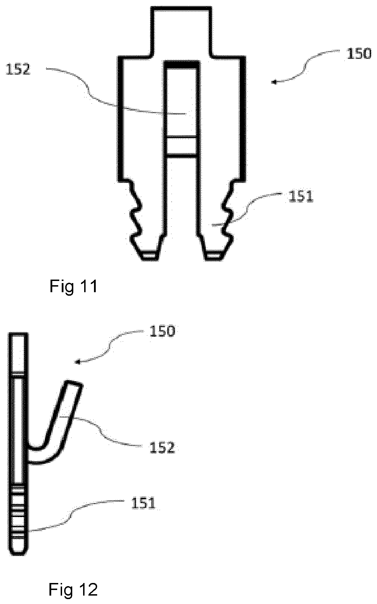

FIG. 11 is the front view of a first electrical contact of the example shown in FIG. 1, and FIG. 12 is the left view of the first electrical contact shown in FIG. 11. The first electrical contact 150 may comprise an insertion portion 151 and a bent portion 152. The insertion portion 151 may comprise one or a plurality of feet and may comprise a serrated profile. In one example, the insertion portion 151 may be configured for insertion into the first insulating seat 130, securing the entire first electrical contact 150 in place. The bent portion 152 may be formed by bending a portion of the first electrical contact 150, and it can be configured to be deformable. In the illustrated example, the bent portion 152 is in a naturally extended state. It will be readily appreciated that the bent portion 152 may be deformed under the action of an external force, for example, deforming around the cylindrical outer profile of the wires 121, in order to extend and secure the wires 121.

The present application also relates to an electrical drive comprising the electrical motor stator 100 described above. It will be readily appreciated that the electrical motor stator may accommodate a rotor positioned therein and is assembled in a housing with a cover. The electrical drive may comprise suitable components such as a controller and power access, among others, and is capable of driving the continuous rotation of the rotor relative to the electrical motor stator 100.

The present application also relates to a compressor comprising the electrical motor described above. In one example, the compressor may be an automotive compressor. In one example, the compressor may be a compressor used in an automotive refrigeration unit.

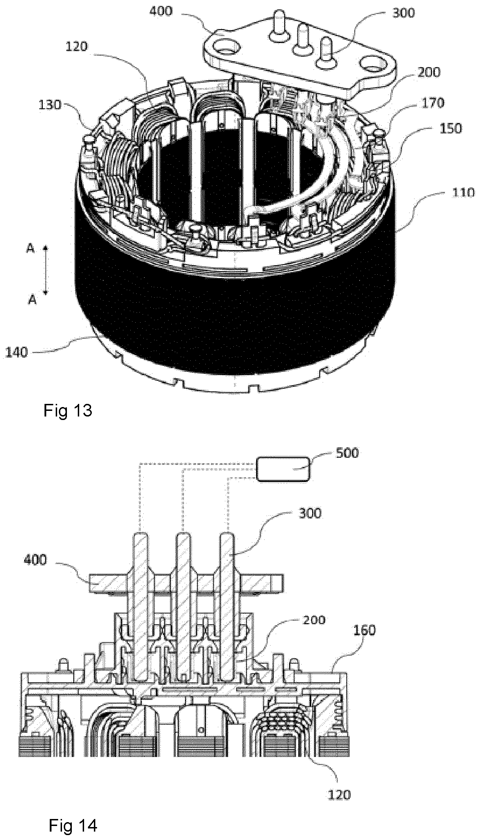

FIG. 13 to FIG. 15 schematically show part of the structure of the compressor. The compressor may comprise a chamber 600 having an opening 601, an electrical control unit 500, electrical terminals 300 and an electrical motor stator 100 described above, among others.

The electrical control unit 500 may be used to control the compressor and to control power distribution, among others. The electrical control unit 500 may be mounted in a space hermetically separated from the chamber 600.

FIG. 13 is a schematic diagram illustrating the connection of some components of a compressor according to one example of the present application. Some components are omitted from FIG. 13 for the sake of clarity. For example, FIG. 13 does not show the body 161 and the sleeve seats 162 of the contact plate 160, but shows the second electrical contacts 170. It will be readily appreciated in conjunction with FIG. 10 that the first connecting portion of the second electrical contacts 170 is electrically connected to the first electrical contacts 150, and the second connecting portion of the second electrical contacts 170 is connected to the first connecting portion of the insertion component 200. The insertion component 200 further comprises a second insertion part that is adapted to the electrical terminals 300. FIG. 13 schematically shows the electrical terminals 300 inserted into the second insertion part of the insertion component 200.

In addition, the electrical terminals 300 may be attached to the mounting plate 400. The mounting plate 400 may, for example, be attached to the bottom wall of the chamber, or be part of the bottom wall of the chamber. In one example, the electrical terminals 300 extend through the mounting plate 400. The electrical terminals 300 may further be electrically connected to an unillustrated electrical control unit.

FIG. 14 is a cross-sectional view of the example shown in FIG. 13, and schematically shows an electrical control unit. As shown in FIG. 14, the electrical terminals 300 may be electrically connected to the electrical control unit 500, for example, by electrical connection wires indicated schematically by multiple dashed lines. Further, the electrical terminals 300 may extend into the chamber 600. In one example, the electrical terminals 300 may extend through the inner wall of the chamber 600.

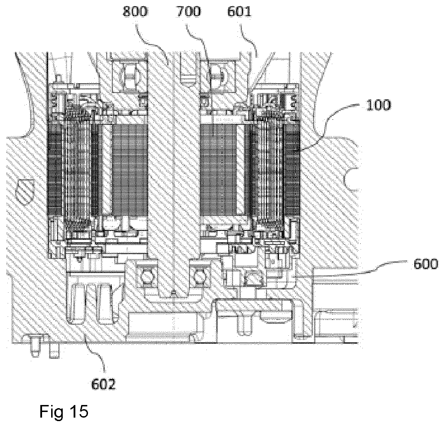

FIG. 15 is a partial cross-sectional view of the compressor according to one example of the present application. As shown in FIG. 15, the electrical motor stator 100 may be mounted within the chamber 600 through the opening 601 of the chamber 600, such that an electrical connection is established between the second connecting portion of the second electrical contacts 170 and the electrical terminals 300 through the insertion component 200. FIG. 15 also schematically shows an electrical drive rotor 700 and a shaft 800 located within the electrical motor stator 100.

In one example, the insertion component 200 may be disposed on the electrical motor stator 100. In one example, the insertion component 200 may be disposed on the contact plate 160, for example, within an electrical interface disposed on the contact plate 160. In one example, the insertion component 200 comprises a first insertion part and a second insertion part. The first insertion part is inserted into and electrically connected with the second connecting portion of the second electrical contacts 170, and the second insertion part may be configured in shape to adapt to the electrical terminals 300.

As shown in FIG. 15, during assembly, the opening 601 of the chamber 600 may be opened and the electrical motor stator 100 may be fitted within the chamber 600 through the opening 601. At this point, the contact plate 160 may face the bottom wall 602 of the chamber 600, and it may be aligned with unillustrated pins on the bottom wall 602 of the chamber 600 through the pin holes 190. During assembly, the electrical terminals 300 may be inserted into the second insertion part of the insertion component 200, thereby establishing an electrical connection between the winding 120 and the electrical control unit 500. In addition, the electrical terminals 300 may pass through the bottom wall 602 of the chamber 600 and be electrically connected to the electrical control unit 500 as schematically shown in FIG. 14. In one example, the bottom wall 602 and the opening 601 are each located at the two opposite sides of the chamber 600. In other words, the bottom wall 602 may face the opening 601, or alternatively, the bottom wall 602 is positioned at a side opposite the opening 601.

The electrical motor stator and compressor of the present application have the advantages of a simple structure, ease of manufacturing and good insulating properties, and also provide convenience of manufacturing. For example, the electrical motor stator of the present application has an integrated contact plate 160 to facilitate automated assembly by a machine. Several components of the electrical motor stator of the present application are disposed to extend in the axial direction A-A, which also facilitates assembly operations by an automated production line.

This specification discloses the present application with reference to the accompanying drawings and also enables those skilled in the art to implement the present application, including the manufacture and use of any device or system, the selection of suitable materials, and the use of any combination of methods. The scope of the present application is defined by the technical solutions for which protection is sought and includes other embodiments that may be conceivable to those skilled in the art. As long as such other embodiments comprise structural elements that do not differ from the literal description of the technical solutions for which protection is sought or comprise equivalent structural elements that do not substantially differ from the literal description of the technical solutions for which protection is sought, such other embodiments should be considered within the scope of protection defined by the technical solutions for which protection is sought under the present application.

## Claims

1. An electrical motor stator, **characterized in that** it comprises a stator assembly (101) comprising:
an iron core (110);
a winding (120) which is wound within the iron core (110) and comprises a plurality of wires (121) extending from the iron core (110);
a first insulating seat (130) mounted to one end surface of the iron core (110);
a plurality of electrically conductive first electrical contacts (150) fixed to the first insulating seat (130), wherein the various wires (121) each extend to the respective first electrical contacts (150) and are electrically connected to the first electrical contacts (150); a contact plate (160) positioned relative to the stator assembly (101) and comprising:
an insulated body (161);
a plurality of sleeve seats (162) disposed on the body (161) and comprising a first opening, a second opening, and a cavity extending between the first opening and the second opening, wherein the first opening is positioned at a first side of the body (161) and the second opening is positioned at a second side of the body (161), with the respective sleeve seats (162) being positioned to correspond to the respective first electrical contacts (150) and, through the first opening, at least partially accommodating the first electrical contacts (150) within the cavity;
a plurality of electrically conductive second electrical contacts (170) comprising a first connecting portion and a second connecting portion, wherein the first connecting portion is disposed within the cavity and in contact with the first electrical contacts (150) to establish an electrical connection, and the second connecting portion is exposed on the second side of the body (161).

2. The electrical motor stator according to Claim 1, **characterized in that** the body (161) and the sleeve seats (162) are integrally injection-molded from an insulating material, the second electrical contacts (170) are at least partially insert-molded within the body (161), and the first insulating seat (130) is spaced between the winding (120) and the iron core (110).

3. The electrical motor stator according to Claim 2, **characterized in that** the cavity is filled with a gel or epoxy resin, and at least a portion of the first electrical contacts (150) and second electrical contacts (170) is enveloped by gel or epoxy resin, wherein the gel or epoxy resin is electrically insulating, and wherein the second opening is configured such that the first electrical contacts (150) and second electrical contacts (170) can be welded through the second opening prior to filling the gel or epoxy resin.

4. The electrical motor stator according to Claim 1, **characterized in that** the opposing end surfaces of the iron core (110) are distributed along the axial direction (A-A), the first electrical contacts (150) extend from the first insulating seat (130) along the axial direction (A-A), and the cavity of the sleeve seats (162) extend along the axial direction (A-A);
wherein the electrical motor stator comprises four wires (121), each corresponding to the U terminal, V terminal, W terminal, and center point of the three-phase alternating current; wherein the wires (121) corresponding to the U terminal, V terminal, and W terminal of the three-phase alternating current are located adjacent to each other.

5. The electrical motor stator according to Claim 1, **characterized in that** the first electrical contacts (150) comprise an insertion portion (151) and a bent portion (152), wherein the insertion portion (151) is inserted into and fixed in place within the first insulating seat (130), and the bent portion (152) extends around the wires (121) and secures the wires (121).

6. The electrical motor stator according to any one of Claims 1 to 5, **characterized in that** it further comprises a second insulating seat (140) that is mounted to the other end surface of the iron core (110); wherein, the second insulating seat (140) is spaced between the winding (120) and the iron core (110).

7. The electrical motor stator according to any one of Claims 1 to 5, **characterized in that** the connection between the first electrical contacts (150) and the wires (121), as well as between the first electrical contacts (150) and the second electrical contacts (170), is established by one of the following methods: brazing, resistance welding, laser welding.

8. The electrical motor stator according to any one of Claims 1 to 5, **characterized in that** the contact plate (160) is fixed to the first insulating seat (130) by one of the following methods: positioning pins, bolts, screws, hot-riveted structures, or a combination thereof; the contact plate (160) further comprises a plurality of pins or pin holes (190) extending in the axial direction (A-A) for positioning the electrical motor stator (100) during assembly.

9. A compressor, **characterized in that** it comprises:
a chamber (600) having an opening (601);
an electronic control unit (500) mounted in a space hermetically separated from the chamber (600);
electrical terminals (300) electrically connected to the electrical control unit (500) and extending into the chamber (600);
the electrical motor stator (100) according to any one of Claims 1 to 8, which is mounted within the chamber (600) through the opening (601), wherein the second connecting portion of the second electrical contacts (170) is electrically connected to the electrical terminals (300) via a connector.

10. The compressor according to Claim 9, **characterized in that** the connector comprises:
a first insertion part which is inserted into the second connecting portion of the second electrical contacts (170), wherein the electrical motor stator (100) is fitted within the chamber (600) from top to bottom through the opening (601), and the contact plate (160) is positioned at the bottom of the electrical motor stator (100); as well as a second insertion part that is electrically connected to the first insertion part, with the electrical terminals (300) connected to the second connection portion, thereby establishing an electrical connection between the winding (120) and the electrical control unit (500); wherein the electrical terminals (300) pass through the bottom wall (602) of the chamber (600) and are connected to the electrical control unit (500), with the bottom wall (602) positioned on one side of the chamber (600) and opposite to the opening (601).
